# NEUE EUROPÄISCHE PATENTSCHRIFT

(11) **EP 0 365 708 B2**
(45) Veröffentlichungstag und Bekanntmachung des Hinweises auf die Entscheidung über den Einspruch: **15.09.2004**
(45) Hinweis auf die Patenterteilung: 17.03.1993
(21) Anmeldenummer: 88117985.7
(22) Anmeldetag: 28.10.1988
(51) Int. Cl.: B27N 7/00

(54) **Verfahren zum Herstellen von Holzwerkstoff- oder Fasermaterial-Artikeln**
Method for producing wooden or fiber material articles
Méthode de fabrication d'articles de bois ou de matériel en fibres

(43) Veröffentlichungstag der Anmeldung: 02.05.1990
(73) Patentinhaber: Kronospan Technical Company Ltd., Nikosia 1082 (CY)
(72) Erfinder: Schmidt, Johannes, c/o Kronospan GmbH, FL-4939 Steinheim 2 (LI)
(74) Vertreter: Gille Hrabal Struck Neidlein Prop Roos

(56) Entgegenhaltungen:
- EP-A- 0 012 169
- DE-A- 749 583
- DE-B- 1 229 284
- ADHÄSION, Band 26, Nr. 11, November 1982, Seiten 26-31, Berlin, DE; C. AYLA et al.: "Neue Entwicklungen in der Verwendung von Tanninformaldehydharzen bei der Herstellung von Holzspanplatten"
- Wilhelm-Klauditz-Institut für Holzforschung, T.U. Braunschweig:"Beiträge zur Verwendung von alkalischen Phenolformaldehydharzen und Ligninsulfonaten bei der Verleimung von Holzspänen" von E.ROFFAEL, Juli 1976.
- "Faserplatten" von Helmut Lampert 1966

## Beschreibung

Die Erfindung betrifft ein Verfahren zum Herstellen von Holzstoff- oder Fasermaterial-Artikeln wie Span- oder Faserplatten, bei dem Holzwerkstoff wie Späne oder aber Fasermaterial mit einem Klebstoff oder Leim, der Formaldehyd als Härter enthält, vermischt, dieses Gemisch in Plattenform gebracht, danach erhitzt, in die endgültige Form gepreßt und schließlich abkühlen gelassen wird.

Die Verwendung von Formaldehyd als Härter oder Bindemittel für bei der Herstellung von Holzwerkstoff- oder Fasermaterial-Artikeln eingesetztem Leimharz bringt das Problem mit sich, daß die fertiggestellten Plattenprodukte Formaldehyd abgeben, was in vielen Fällen unzulässig ist, weil freies Formaldehyd gesundheitsschädigende Wirkungen entwickeln kann. Die Abgabe von Formaldehyd von den fertigen Artikeln wie Platten ist einerseits darauf zurückzuführen, daß im Leimharz Formaldehyd in einem gewissen Überschuß verwendet wird. Bei Harnstoff-Formaldehyd-Leimharzen ist außerdem eine hydrolytisch bedingte Formaldehyd-Freisetzung aus dem ausgehärteten Leimharz möglich, die bei Verwendung von Tannin-Formaldehyd-Leimharz nicht zu befürchten ist. Durch Zugabe von Substanzen, die mit Formaldehyd reagieren, sogenannten "Formaldehyd-Fängern", kann das Formaldehydabgabepotential von mit Leimharz gebundenen Holzwerkstoffen vermindert werden, jedoch entstehen hierdurch einerseits höhere Kosten, während andererseits eine vollständige Bindung des freien oder freigesetzten Formaldehyds im fertigen Holzwerkstoff-Artikel nicht gewährleistet ist.

Der Erfindung liegt die Aufgabe zugrunde, Holzwerkstoff- oder Fasermaterial-Artikel wie Spanoder Faserplatten unter Verwendung von Formaldehyd-Leimharzen preiswert so herstellen zu können, daß die fertigen Artikel im praktischen Gebrauch kein Formaldehyd in gesundheitsschädigenden und damit unzulässigen Mengen abgeben können.

Zur Lösung dieser Aufgabe wird bei einem Verfahren der eingangs genannten Gattung vorgeschlagen, daß als Bindemittel ein Tannin enthaltender Formaldehyd Klebstoff verwendet wird und die Artikel wie Platten nach dem Heißpressen und vor dem Abkühlen zum Austreiben des Gehaltes an freiem Formaldehyd eine Zeit lang bei erhöhter Temperatur gelagert werden.

Dabei werden die Artikel wie Platten unmittelbar nach dem Heißpressen, d.h. nach dem Verlassen der Heißpresse, aufeinander gestapelt, bevor sie abkühlen können, und so gestapelt für die gewünschte Zeit gelagert. Dies kann in einem in der Nähe der Heißpresse angeordneten Raum erfolgen, der gegen Wärmeabstrahlung geschützt sein kann. Auf diese Weise wird für die Nachbehandlung die Eigenwärme der die Heißpresse verlassenden Artikel genutzt. Diese Wärme wird in dem Stapel der Artikel verhältnismäßig lange gehalten, so daß auch für eine über zwei bis drei Tage dauernde Nachbehandlung im allgemeinen keine zusätzliche Wärme von außen zugeführt werden muß.

Erfindungsgemäß erfolgt also eine Nachbehandlung der in einer Heißpresse geformten Holzwerkstoffoder Fasermaterial-Artikel wie Span- oder Faserplatten, die dazu führt, daß die Artikel schließlich kein freies oder freisetzbares Formaldehyd mehr enthalten, so daß sie im praktischen Gebrauch auch kein Formaldehyd mehr abgeben können. Dementsprechend wird es durch die Erfindung möglich. Tannin- Formaldehyd-Leimharze für die Herstellung von Span- oder Fasermaterialplatten zu verwenden, ohne daß sich auf Formaldehydabgabe zurückzuführende gesundheitliche Schäden im praktischen Gebrauch derartiger Platten einstellen können.

Die Artikel werden während der Wärme-Nachbehandlung bei unter der Heißpreß-Temperatur liegender variabler Temperatur wärmegelagert. Dadurch ist es möglich, die Wärme, die den Artikeln während des Heißpressens zugeführt worden ist, für die Nachbehandlung zu nutzen, so daß die Nachbehandlung wirtschaftlich durchgeführt werden kann.

Um zu gewährleisten, daß das freie oder freisetzbare Formaldehyd während der Nachbehandlung vollständig oder zumindest nahezu vollständig aus den Artikeln wie Span- oder Fasermaterialplatten ausgetrieben wird, werden die Artikel wie Platten nach dem Heißpressen einige Tage lang wärmegelagert. Es hat sich beispielsweise als zweckmäßig herausgestellt, daß die Wärmelagerung etwa zwei bis drei Tage dauern sollte.

Die für die Nachbehandlung genutzte Wärme der die Heißpresse verlassenden Artikel wie Platten wird im Stapel gehalten, wenn die einzelnen heißen Platten direkt aufeinander gestapelt werden.

Tannine sind Polyphenole mit Gerbstoffeigenschaften, die in verschiedenen Pflanzenteilen vorkommen und beispielsweise durch Extraktion aus einigen Rinden und Hölzern gewonnen werden. Die Tannine eignen sich als Bindemittel für Holzwerkstoffe. Bei Reaktion von Tanninen mit Formaldehyd entstehen hochmolekulare Kondensationsprodukte, die eine Bindung zwischen den Spänen oder sonstigen Partikeln von Holzwerkstoffen hervorrufen. In den hochmolekularen Kondensationsprodukten ist das Formaldehyd praktisch unlösbar gebunden. Damit jedoch das Tannin des Leimharzes vollständig für die gewünschte Bindewirkung genutzt werden kann, arbeitet man mit einem gewissen Überschuß an Formaldehyd. Dieser Überschuß führt zu einem gewissen Anteil von freiem Formaldehyd im fertigen Artikel, der aus den oben genannten Gründen vor der praktischen Verwendung des Artikels entfernt werden muß, um Gesundheitsschädigungen zu vermeiden. Der notwendige Überschuß an Formaldehyd ist bei Einsatz von Tannin-Formaldehyd-Leimharzen gravierend, weil für die Herstellung von normalen Spanplatten für die Beleimung von einer Tonne Holzspäne etwa 10 % Tannin-Formaldehyd-Leimharz benötigt wird. Bei der Herstellung von MDF-Platten liegt der Leimanteil etwa doppelt so hoch.

Nach den bisher üblichen Herstellungsverfahren ergaben sich bis 60mg/100 g atro Platte Formaldehyd gemessen nach der Prüfmethode EN 120 als nachträgliche Formaldehydabgabe. Dies ist nach den gültigen Vorschriften ein unzulässig hoher Wert, denn ein Gehalt an freiem Formaldehyd über 0,1 ppm Ausgleichskonzentration gemessen unter Prüfbedingungen der ETB-Richtlinie ist unzulässig. Gemäß der vorliegenden Erfindung ist es jedoch möglich, durch die Wärmenachbehandlung den Gehalt an freiem Formaldehyd zu senken, so daß die Formaldehydabgabe höchstens 0,05 ppm bis 0,01 ppm beträgt. Bei dem letztgenannten Wert handelt es sich um den Bereich des Blindwertes des Prüfraumes, der praktisch nicht mehr meßbar ist.

Durch die Erfindung ist es in einfacher und höchst wirtschaftlicher Weise möglich, bei Holzwerkstoff-Artikeln oder Fasermaterial-Artikein, beispielsweise bei Holzspanplatten oder Fasermaterial-Platten, als Bindemittel Leimharze mit Formaldehyd als Härter zu benutzen, ohne daß von dem fertigen Artikel auf die Freisetzung von Formaldehyd zurückzuführende Gesundheitsschäden zu befürchten sind.

Leimharze mit Formaldehyd als Härter sind preiswert und sehr wirkungsvoll, besonders Tannin-Formaldehyd-Leimharze, so daß deren Einsatz aus wirtschaftlichen Gründen wünschenswert ist. Die vorliegende Erfindung weist einen Weg, wie dieser wirtschaftliche Vorteil ohne die Gefahr von Gesundheitsschäden genutzt werden kann.

## Patentansprüche

1. Verfahren zum Herstellen von Holzwerkstoff- oder Fasermaterial-Artikeln wie Span- oder Faserplatten, bei dem Holzwerkstoff, z.B. Späne, oder Fasermaterial mit einem Formaldehyd als Härter enthaltenden Bindemittel, das ein Tannin und einen Überschuß an Formaldehyd enthaltender Klebstoff ist, vermischt, dieses Gemisch in Plattenform gebracht, danach erhitzt und in die endgültige Form gepreßt, wird, wobei zum Reduzieren des Gehaltes an freiem Formaldehyd durch Austreiben des freien Formaldehyds bei erhöhter Temperatur die Artikel unmittelbar nach dem Heißpressen und vor dem Abkühlen aufeinandergestapelt und so gestapelt für die gewünschte Zeit gelagert und schließlich abkühlen gelassen werden.

2. Verfahren nach Anspruch 1, **dadurch gekennzeichnet, daß** die Artikel nach dem Heißpressen einige Tage lang wärmegelagert werden.

3. Verfahren nach. Anspruch Anspruch 2, **dadurch gekennzeichnet, daß** die Artikel zwei bis drei Tage lang wärmegelagert werden.

## Claims

1. Process for producing wood or fibrous material articles such as chipboards or fibreboards, in which wood material such as chips or fibrous material is mixed with a binder which contains formaldehyde as the hardener and is an adhesive containing tannin and an excess of formaldehyde, this mixture is brought into a board form, then heated and pressed into the final shape, where, in order to reduce the content of free formaldehyde by driving out the free formaldehyde, immediately after hot pressing and before cooling, the articles are stacked on one another and in this way are stored in stacked form for the desired time at elevated temperature are finally allowed to cool.

2. Process according to Claim 1, **characterized in that** the articles such as boards are stored hot for some days after the hot pressing.

3. Process according to Claim 2, **characterized in that** the articles are stored hot for two to three days.

## Revendications

1. Procédé pour fabriquer des articles en matière à base de bois ou en matière fibreuse, tels que des panneaux de copeaux ou de fibres, dans lequel la matière à bois, par exemple des copeaux, ou une matière fibreuse est mélangée à un liant qui contient du formaldéhyde comme durcisseur, ce mélange est mis sous forme de panneaux, puis chauffé et pressé à la forme définitive, dans lequel procédé, pour réduire la teneur en formaldéhyde libre par l'évacuation du formaldéhyde libre sous une température élevée, les articles sont empilés les uns sur les autres aussitôt après le pressage à chaud et avant le refroidissement et sont ainsi empilés pendant le temps voulu et, finalement, sont laissés à refroidir.

2. Procédé selon la revendication 1, **caractérisé en ce que** les articles sont entreposés à chaud pendant quelques jours après le pressage à chaud.

3. Procédé selon la revendication 2, **caractérisé en ce que** les articles sont entreposés à chaud pendant deux à trois jours.
